# EUROPÄISCHE PATENTSCHRIFT

(11) **EP 3 628 964 B1**
(45) Veröffentlichungstag und Bekanntmachung des Hinweises auf die Patenterteilung: **14.02.2024**
(21) Anmeldenummer: 18197799.2
(22) Anmeldetag: 28.09.2018
(51) Int. Cl.: G01B 11/24, G02B 26/08

(54) **OPTO-ELEKTRO-MECHANISCHES STRAHLMANIPULATIONSSYSTEM**
OPTO-ELECTRO-MECHANICAL BEAM MANIPULATION SYSTEM
SYSTÈME DE MANIPULATION OPTO-ÉLECTROMÉCANIQUE DE FAISCEAUX

(43) Veröffentlichungstag der Anmeldung: 01.04.2020
(73) Patentinhaber: Hexagon Technology Center GmbH, 9435 Heerbrugg (CH)
(72) Erfinder: MAYER, Tim, 9326 Horn (CH)
(74) Vertreter: Kaminski Harmann

(56) Entgegenhaltungen:
- US-A- 4 421 381
- US-A1- 2012 257 268
- US-B1- 6 330 523

## Beschreibung

Die Erfindung betrifft ein opto-elektro-mechanisches System zur Manipulation optischer Strahlung. Ebenso betrifft die Erfindung einen optischen Scanner, welcher Messstrahlung mittels des opto-elektro-mechanischen Systems ablenkt.

Opto-elektro-mechanische Strahlmanipulationssysteme erzielen eine Ablenkung oder Verformung eines optischen Strahls mittels eines optischen Elements dadurch, dass das optische Element rotatorisch, translatorisch oder in einer kombinierten Art von Rotation und Translation, quasistatisch, dynamisch oder resonant um eine Nulllage ausgelenkt wird. Die US 4421381 offenbart ein mechanisches Vibrationselement, welches als Resonator mit einer vorbestimmten Frequenz nutzbar ist und einen optischen Deflektor aufweisen kann.

Bei der quasistatischen Auslenkung wird eine bestimmte Auslenkposition angefahren und gehalten. Bei der dynamischen Auslenkung schwingt oder bewegt sich das optische Element kontinuierlich um die Nulllage und bei der resonanten Auslenkung schwingt das optische Element bei einer Resonanzfrequenz um die Nulllage. Unabhängig von der Art der Auslenkung basiert der mechanische Aufbau auf dem Prinzip, dass das optische Element, welches quasistatisch, dynamisch oder in Resonanz ausgelenkt wird über entsprechende Federelemente mit einem Rahmen oder Stator verbunden ist. Die Federelemente stellen dabei gleichzeitig die reproduzierbare und praktisch hysteresefreie rotatorische oder translatorische Bewegbarkeit bereit. Das Federelement ist je nach Auslenkungsart unterschiedlich ausgebildet. Üblicherweise dienen Torsionsfederelemente der Bereitstellung einer rotatorischen Bewegbarkeit und Linearfederelemente oder Blattfederelemente der Bereitstellung einer translatorischen Bewegbarkeit. Die entsprechenden Federelemente weisen funktionsbestimmende konstruktive und federmaterialspezifische Merkmale auf, sodass sich das Federelement bei der Auslenkung des optischen Elements elastisch reversibel verformt. Aufgrund der flexiblen Verbindung und deren Verformungscharakteristik kann mittels eines geeigneten Aktors das optische Element entsprechend quasistatisch, dynamisch oder resonant ausgelenkt werden. Die US 2012/0257268 A1 offenbart einen Aktuator mit einem um eine Achse drehbaren beweglichen Teil.

Der Aktor ist dabei auf das opto-elektro-mechanische Strahlmanipulationssystem abgestimmt und bewirkt die Auslenkung beispielsweise basierend auf elektromagnetischen, elektrostatischen, piezoelektrischen oder auch thermoelektrischen Wirkprinzipien. Insbesondere hängt die Wahl des entsprechenden Aktors von der geometrischen Ausgestaltung und der Masse des auszulenkenden optischen Elements, der Federelementverformungscharakteristik, der zu erzielenden Auslenkdynamik und dem entsprechenden Auslenkbereich ab. Somit sind für einen Grossteil der Anwendungen bei denen ein solches opto-elektro-mechanisches Strahlmanipulationssystem zum Einsatz kommt Kenngrössen wie beispielsweise der maximale Auslenkbereich, die maximale Schwingfrequenz, die Grösse einer Wirkfläche des optischen Elements, eine minimale Leistungsaufnahme und thermischer Stabilitätsbereich entscheidend.

Seitens der Herstellung bestimmen beispielsweise die Anforderungen an die Reproduzierbarkeit, Genauigkeit und Integrierbarkeit des Strahlmanipulators aber auch die Wirtschaftlichkeit die Wahl des geeigneten Herstellungsprozesses.

Aus dem Stand der Technik ist eine Vielzahl an möglichen opto-elektro-mechanischen Strahlmanipulationssystemen bekannt, wobei die Gruppe der opto-elektro-mechanischen Scanner Systeme dadurch charakterisiert ist, dass das optische Element zur Strahlablenkung mehrheitlich ein Spiegel, ein Prisma oder eine Linse ist, siehe z.B. die US 6330523 B1.

Im Bereich der laserbasierten Vermessungstechnik sind entsprechende Vermessungsgeräte, beispielsweise Totalstationen oder Theodolite, zur genauen Vermessung geodätischer Zielpunkte, mit einer Scannereinheit ausgerüstet. In der Scannereinheit wird mittels eines entsprechenden opto-elektro-mechanischen Strahlmanipulationssystems die von einer Laserquelle erzeugte Messstrahlung kontrolliert entweder in Richtung des zu vermessenden geodätischen Zielpunkts abgelenkt oder über einen, durch die maximal mögliche Auslenkung des optischen Elements limitierten, definierten Sichtfeldbereich gescannt. Ein Teil der Messstrahlung wird vom geodätischen Zielpunkt zurück zum Vermessungsgerät reflektiert und basierend darauf interferometrisch oder mittels Laufzeitmessung die Distanz zum geodätischen Zielpunkt ermittelt. Mit der entsprechenden Information über den Winkel, unter welchem der geodätische Zielpunkt vom Laserstrahl angezielt wird, sind die räumlichen Koordinaten des geodätischen Zielpunkts bestimmbar.

Ein weiterer Bereich der Vermessungstechnik betrifft die digitale Erfassung oder Vermessung von Objekten oder von Oberflächen mittels eines Verfahrens, bei welchem ein optischer Scanner mit bestimmter räumlicher Lage das entsprechende Objekt oder die entsprechende Oberfläche mit einem Licht- oder Laserstrahl abtastet und basierend auf der von dem Objekt oder der Oberfläche reflektierten Strahlung die räumliche Position eines angezielten Oberflächenpunktes erfasst wird. Das Ermitteln der dreidimensionalen Koordinateninformation der Oberflächenpunkte erfolgt analog zu derjenigen der geodätischen Zielpunkte. Auf diese Weise kann in Minuten- oder Sekundenschnelle die dreidimensionale Koordinateninformation von einer Vielzahl von Oberflächenpunkten ermittelt und somit ein Objekt oder eine Oberfläche digital erfasst werden. Daraus ergeben sich typische Vermessungsaufgaben wie beispielsweise die digitale Erfassung von Industrieanlagen, Baustellengeländen, Häuserfassaden, historischen Gebäuden, Unfallorten und Verbrechensszenen aber auch von Fahrzeugkarrosserien, Flugzeugrümpfen, Innenräumen und Bauteilen. Des Weiteren kann eine derartige Objekt- oder Oberflächenerfassung zur Erstellung von Karteninformation oder zur Navigation von unbemannten Fahrzeugen oder Flugobjekten verwendet werden.

Sowohl bei Vermessungsgeräten mit einer Scannereinheit als auch bei den optischen Scannern allein werden Laser- oder Lichtpulse über ein rasch einstellbares optisches Element eines opto-elektro-mechanischen Strahlmanipulationssystems gemäss einem definierten Abtastraster zur Oberfläche gesendet. Durch die entsprechende Anwendung vorgegeben, bestehen spezifische Anforderungen an den Winkelbereich, in welchen die Strahlung abgelenkt werden kann, und an die Geschwindigkeit und Genauigkeit, mit welcher entsprechende Winkelpositionen ab- oder angefahren werden können.

Es ist eine Aufgabe der vorliegenden Erfindung ein hinsichtlich Funktionalität verbessertes und hinsichtlich Komplexität vereinfachtes opto-elektro-mechanisches Strahlmanipulationssystem bereitzustellen zur Verwendung in laser- und/oder lichtstrahlbasierten Scannern oder Scannereinheiten.

Der Erfindung liegt die Idee zugrunde ein Strahlmanipulationssystem mit, gegenüber gattungsgemässen Strahlmanipulationssystemen wie sie typischerweise in Scannereinheiten von Vermessungsgeräten oder einem Scanner allein verwendet werden, verbesserter Auslenkdynamik und robusterem Aufbau bereitzustellen.

Diese Aufgabe wird durch die Verwirklichung der kennzeichnenden Merkmale des unabhängigen Anspruchs gelöst. Merkmale, die die Erfindung in alternativer oder vorteilhafter Weise weiterbilden, sind den abhängigen Patentansprüchen zu entnehmen.

Die Erfindung betrifft ein opto-elektro-mechanisches System zur Manipulation optischer Strahlung aufweisend ein rotatorisch bewegbares Element, wobei das Element selbst ein optisches Element ist oder ein optisches Element aufweist. Des Weiteren weist das System einen Stator zum bewegbaren Element mit einer einen Auslenkungsbereich freigebenden Aussparung, eine, eine entsprechende kinematisch definierte Bewegbarkeit bereitstellende, flexible Verbindung zwischen dem Stator und dem bewegbaren Element, und einen Aktor zur Auslenkung des bewegbaren Elements auf, wobei der Stator mit dem bewegbaren Element einstückig verbunden ist, und der einstückige Verbund aus Silikatglas, insbesondere Quarzglas besteht, und die Aussparung so um das bewegbare Element angeordnet ist, dass das bewegbare Element entsprechend der kinematisch definierten Bewegbarkeit unter elastischer Verformung der Verbindung mittels des Aktors auslenkbar ist.

Insbesondere Quarzglas zeichnet sich durch eine hohe theoretische Fliessspannung bzw. Zugfestigkeit aus. Diese theoretischen Werte werden üblicherweise in der Anwendung nicht erreicht, da das Verformungsverhalten unter mechanischer Belastung in der Anwendung von extrinsischen Faktoren bestimmt wird, hauptsächlich von Oberflächendefekten welche bei der Fertigung entsprechender Komponenten ins Material eingebracht werden. Aufgrund des atomaren Verbindungsaufbaus und der Mikrostruktur kann das Material einem sich ausbreitenden Defekt nicht entgegenwirken, beispielsweise durch plastische Verformung, was sich in sehr geringen Zähigkeitswerten des Materials zeigt. Des Weiteren hat Quarzglas einen geringen thermischen Ausdehnungskoeffizienten und eine hohe chemische Beständigkeit. Aufgrund der theoretischen, mechanischen und thermischen Eigenschaften eignet sich Quarzglas als flexibles Verbindungsmaterial bei Aufweisung entsprechend defektfreier Verbindungsoberflächen.

Um diese Eigenschaften zumindest näherungsweise in einer entsprechenden aus Quarzglas gefertigten Komponente nutzen zu können ist es vorteilhaft die Komponente einstückig herzustellen mit einem Verfahren welches defektfreie Oberflächen an der Komponente bereitstellt. Ein solches Verfahren, ähnlich einem 3D Druckprozess basiert auf der lokalen Modifikation von Bereichen eines Quarzglasrohlings mittels fokussierter Laserstrahlung und anschliessendem chemischen Wegätzen zuvor der fokussierten Laserstrahlung ausgesetzter Glasbereiche. Durch dieses laserbasierte Ätzverfahren erzeugte Oberflächen weisen eine sehr geringe Defektdichte auf und eignen sich auch zur Beschichtung insbesondere mit metallischen Schichten oder Schichtfolgen. Des Weiteren, ist der 3D-druckartige Prozess ausreichend flexibel gewünschte Geometrien auch makroskopisch zu erzeugen, um beispielsweise, wie in der vorliegenden Erfindung, grosse Oberflächen/Wirkflächen/Spiegelflächen des bewegbaren Elements bereitzustellen, welche ein entsprechend grosses optisches Element tragen oder eine entsprechend grossflächige Spiegelbeschichtung erhalten. Ebenso erlaubt der Prozess die Erzeugung optischer Wirkflächen an einem Element, wodurch das Element selber beispielsweise als Linse ausgebildet ist. Ein weiterer Vorteil des Verfahrens ist die Möglichkeit zur Formgebung flexibler, sich elastisch verformender Verbindungen, insbesondere entsprechender Verbindungsquerschnitte. Insbesondere bei flexiblen Verbindungen, welche unter Krafteinwirkung elastisch tordieren ermöglicht eine homogene Verteilung der mechanischen Spannungen im Verbindungsvolumen ein verbessertes dynamisches Verhalten unter wechselseitigen Torsionsbelastungen. Dabei führt ein rundlicher Verbindungsquerschnitt zu homogeneren Spannungsverteilungen als ein Querschnitt mit Ecken oder Spitzen. Ein weiterer Vorteil bietet der Herstellungsprozess dahingehend, dass bezogen auf das opto-elektro-mechanische Strahlmanipulationssystem die Grösse entsprechender Auslenkbereiche einstellbar ist.

Eines nach diesem Verfahren gefertigte opto-elektro-mechanische Strahlmanipulationssystem bietet aufgrund der Einstückigkeit eine hohe thermische Stabilität, da aufgrund des einen, geringen thermischen Ausdehnungskoeffizienten des einstückigen Bauteils nur geringe Thermospannungen auftreten.

Die Manipulation optischer Strahlung kann sowohl eine strahlformende als auch eine strahlablenkende Wirkung betreffen, welche mit entsprechenden optischen Elementen entweder in Transmission oder Reflexion erzielt werden kann. Beispielsweise können Linsen, Prismen oder Spiegel als optische Elemente verwendet werden, wobei die Linse, das Prisma, oder der Spiegel entsprechend der jeweiligen Ausgestaltung entweder eine strahlformende oder strahlablenkende Wirkung erzielt.

Eine kinematisch definierte Bewegbarkeit kann eine Rotation, oder eine beliebige Kombination aus Rotation und Translation des bewegbaren Elements beschreiben. Dabei kann die Bewegbarkeit bis zu sechs Freiheitsgrade, drei rotatorische und drei translatorische umfassen. Des Weiteren kann die kinematisch definierte Bewegbarkeit die Dynamik beschreiben mit welcher eine bestimmte Bewegung/Auslenkung des bewegbaren Elements ausgeführt wird, beispielsweise betreffend die Geschwindigkeit, Beschleunigung oder Frequenz und somit eine quasistatische, dynamische oder resonante Bewegung/Auslenkung beschreiben. Ebenso kann die kinematisch definierte Bewegbarkeit eine Abfolge von unterschiedlichen quasistatischen, dynamischen und resonanten Bewegungsmustern beschreiben.

Ebenso betrifft die Erfindung einen optischen Scanner zur Vermessung von Oberflächen, aufweisend eine Strahlquelle zur Aussendung optischer Messstrahlung, ein opto-elektro-mechanisches Strahlmanipulationssystem entsprechend dem oben genannten Ausführungsbeispiel, und einen Detektor zur Detektion von zumindest Teilen der von der zu vermessenden Oberfläche reflektierten Messstrahlung. Dabei weist das opto-elektro-mechanische Strahlmanipulationssystem einen Auslenkungsausmassgeber zur Bestimmung des Auslenkungsausmasses des bewegbaren Elements auf, und die optische Messstrahlung wird mittels des opto-elektro-mechanischen Strahlmanipulationssystems in Richtung der zu vermessenden Oberfläche so abgelenkt, dass die zu vermessende Oberfläche von der Messstrahlung mittels des rotatorisch bewegbaren Elements entsprechend der kinematisch definierten Bewegbarkeit abgetastet wird, und ein Teil von der reflektierten Messstrahlung mit dem Detektor detektiert wird und basierend darauf und auf dem bestimmten Auslenkungsausmass des bewegbaren Elements die abgetastete Oberfläche vermessen wird.

Die Strahlquelle kann beispielsweise eine Laserdiode sein, zur Aussendung von Distanzmessstrahlung, wobei die ausgesendete Distanzmessstrahlung mittels des opto-elektro-mechanischen Strahlablenksystems ablenkbar ist, insbesondere in einen definierten vertikalen Sichtfeldbereich. Insbesondere ist die von der Strahlungsquelle erzeugte Distanzmessstrahlung gepulste Laserstrahlung. Des Weiteren kann das Auslenkungsausmass beispielsweise eine Winkelinformation, eine Distanz/translatorische Auslenkung oder eine Kombination davon jeweils in Bezug auf eine Nulllage des Bewegbaren Elements enthalten.

Bei der Vermessung einer Oberfläche wird eine Vielzahl von Oberflächenpunkten vermessen. Die Koordinateninformation eines Oberflächenpunktes kann dabei über die Distanz zu dem Oberflächenpunkt und einer entsprechenden Winkelinformation, welche die Winkel aufweist unter welchen der Oberflächenpunkt angezielt wird ermittelt werden. Diese Winkelinformation kann aus dem Auslenkungsausmass oder mittels weiterer Winkel- oder Auslenkungsausmassgeber ermittelt werden. Die Distanz kann basierend auf einem Teil der reflektierten Strahlung entsprechend dem Prinzip der Triangulation, Interferometrie oder Laufzeitmessung ermittelt werden.

In einer spezifischen Ausführungsform des optischen Scanners, kann das bewegbare Element zur Strahlablenkung einen Spiegel aufweisen, oder das bewegbare Element selbst kann ein Prisma oder eine Linse sein. Beispielsweise kann das bewegbare Element mit einer optische Strahlung reflektierenden Schicht oder Schichtfolge beschichtet sein. Insbesondere kann die Beschichtung mindestens eines der Elemente aus: Gold, Aluminium und Silber aufweisen.

Gemäss der Erfindung soll die flexible Verbindung des optischen Scanners eine rotatorische Bewegbarkeit bereitstellen, eine Torsionsachse definieren, stabförmig ausgebildet sein und sich unter Torsion elastisch verformen, und der Aktor kann das bewegbare Element entsprechend der kinematisch definierten Bewegbarkeit rotatorisch auslenken. Das bewegbare Element kann somit um die Torsionsachse rotatorisch ausgelenkt werden, wobei die flexible Verbindung tordiert und eine Funktionalität vergleichbar derjenigen eines Torsionsfederelements bereitgestellt wird.

In einer weiteren spezifischen Ausführungsform des optischen Scanners, kann das opto-elektro-mechanische Strahlmanipulationssystem einen weiteren Stator zu dem einen Stator mit einer einen weiteren Auslenkungsbereich freigebenden weiteren Aussparung, eine weitere, eine entsprechende kinematisch definierte rotatorische Bewegbarkeit des einen Stators bereitstellende, flexible Verbindung zwischen dem weiteren Stator und dem einen Stator, und einen weiteren Aktor zur rotatorischen Auslenkung des einen Stators, entsprechend der kinematisch definierten Bewegbarkeit, unter elastischer Verformung der weiteren Verbindung aufweisen. Dabei ist der weitere Stator mit dem einen Stator einstückig verbunden und der einstückige Verbund besteht aus Silikatglas insbesondere Quarzglas, und die weitere flexible Verbindung zur Bereitstellung einer kinematisch definierten rotatorischen Bewegbarkeit des einen Stators definiert eine weitere Torsionsachse rechtwinklig zur einen Torsionsachse, ist stabförmig ausgebildet und verformt sich unter Torsion elastisch, sodass die Bewegbarkeit des bewegbaren Elements zwei rotatorische Freiheitsgrade aufweist. Falls das opto-elektro-mechanische Strahlmanipulationssystem beispielsweise zwei Statoren aufweist, erfüllt der eine Stator, welcher mit dem bewegbaren Element einstückig verbunden ist seine statische Funktionalität in Bezug auf das bewegbare Element. Gegenüber dem weiteren Stator ist der eine Stator jedoch nicht statisch, sondern in Bezug auf den weiteren Stator beweglich. Somit erfüllt der weitere Stator seine statische Funktionalität in Bezug auf den einen Stator. Auf diese Weise kann das opto-elektro-mechanische Strahlmanipulationssystem weitere Statoren, Aktoren und Verbindungen aufweisen, sodass eine Bewegbarkeit des bewegbaren Elements in sechs Freiheitsgraden, drei rotatorischen und drei translatorischen ermöglicht wird.

Gemäß der Erfindung hat die stabförmig ausgebildete flexible Verbindung einen gerundeten, insbesondere kreisförmigen oder ovalen, Stabquerschnitt. Dabei kann eine Flächennormale der Querschnittsfläche in Richtung der Stablängsrichtung zeigen. Der gerundete, insbesondere kreisförmige oder ovale, Verbindungsquerschnitt, also ein Querschnitt ohne Ecken bzw. Spitzen führt zu einer homogenen Spannungsverteilung im Verbindungsvolumen. Die homogene Spannungsverteilung, die defektfreie Verbindungsoberfläche und die damit nutzbaren intrinsischen mechanischen Eigenschaften des Silikatglases ermöglichen dabei ein Erzielen hoher Auslenkungsamplituden unter minimalem Auslenkungskräfteaufwand. Dies ist in der vorliegenden Konfiguration hauptsächlich auf die geringen Dämpfungseigenschaften der Kombination der Konstruktion mit dem Material Silikatglas, insbesondere Quarzglas, zurückzuführen. Des Weiteren erlaubt der optimierte Verbindungsquerschnitt in Kombination mit den nutzbaren intrinsischen mechanischen Eigenschaften des Silikatglases das Erzielen hoher Schwingfrequenzen unter gleichzeitiger Berücksichtigung der Bereitstellung einer möglichst grossen Oberfläche/Wirkfläche/Spiegelfläche des entsprechenden bewegbaren Elements.

Gemäss einer weiteren spezifischen Ausführungsform des opto-elektro-mechanischen Strahlmanipulationssystems oder des optischen Scanners weist ein Aktor ein erstes Aktorelement, insbesondere ein Magnet (oder vergleichbares Element), und ein zweites Aktorelement, insbesondere eine Spule (oder vergleichbares Element), auf und lenkt das bewegbare Element basierend auf einem Zusammenwirken der Aktorelemente nach einem der Wirkprinzipen aus: Elektromagnetismus, Elektrostatik, Piezoelektrizität, und Thermoelektrik aus. Ein Teil eines Aktorelements kann sich dabei am bewegbaren Element oder am bewegbaren Stator befinden. Der Scanner kann auch zu jedem Aktor einen regelnden Aktor aufweisen, welcher als Teil eines Regelkreises die Auslenkung des bewegbaren Elements regelt und beispielsweise für sich ändernde Resonanzfrequenzen aufgrund von Temperaturänderungen kompensiert.

In einer weiteren spezifischen Ausführungsform des opto-elektro-mechanischen Strahlmanipulationssystems oder des optischen Scanners kann das erste Aktorelement ein Permanentmagnet und das zweite Aktorelement eine Spule sein. Dabei kann der Permanentmagnet mittels sich änderndem Magnetfeld angeregt werden, wobei zur Anregung ein quasistatischer oder sich zeitlich periodisch ändernder Stromverlauf an der Spule angelegt wird und dadurch ein entsprechendes quasistationäres Magnetfeld oder sich periodisch änderndes Magnetfeld erzeugt wird.

Gemäss einer weiteren spezifischen Ausführungsform des opto-elektro-mechanischen Strahlmanipulationssystems oder des optischen Scanners können diese zumindest Teile eines Aktorelements als strukturierte Beschichtung aufweisen. Eine strukturierte Beschichtung kann beispielsweise eine magnetische Fläche sein oder eine Leiterbahnstruktur. Eine solche Beschichtung kann insbesondere mittels eines lithographischen Dampfphasenabscheideprozesses, Siebdruckprozesses oder 3D-Druckprozesses realisiert werden.

Gemäss einer spezifischen Ausführungsform des opto-elektro-mechanischen Strahlmanipulationssystems weist dieses eine Linse, ein Prisma oder ein Spiegel als bewegbares Element auf, wobei entsprechend einer Ausgestaltung der Linse, des Prismas oder des Spiegels eine Strahlablenkbarkeit oder Strahlformbarkeit bereitgestellt wird.

Beispielsweise kann das bewegbare Element als Linse mit zwei einander gegenüberliegenden Wirkflächen ausgebildet sein, wobei die Aussparung so um die Linse angeordnet ist, dass beide Wirkflächen gegen aussen hin grösstenteils freiliegen. Somit kann optische Strahlung von beiden Seiten auf die Linsenoberfläche einfallen beziehungsweise auf beide Seiten austreten, wobei das optische Element vom Strahl durchstrahlt und der Strahl abgelenkt wird. Das optische Element kann somit in Transmission genutzt werden. Die Linse kann dabei strahlformende oder Strahlablenkende Wirkung auf die optische Strahlung haben. Auf gleiche Weise kann auch ein Prisma zum Einsatz kommen. Ein Spiegel kann beispielsweise eine gekrümmte Spiegelfläche aufweisen, wodurch er eine Strahlformende Wirkung auf die optische Strahlung hat.

Nach einer weiteren Ausführung des Strahlmanipulationssystems kann das bewegbare Element eine Linse sein wobei die Linse Teil einer Alvarez Linse ist. Dabei kann die eine Hälfte der Alvarez Linse gegenüber der anderen Hälfte mittels des Aktors entsprechend der kinematisch definierten Bewegbarkeit ausgelenkt werden.

In einer weiteren spezifischen Ausführungsform des optischen Scanners kann der Auslenkungsausmassgeber ein optischer Auslenkungsausmassgeber sein mit einer Strahlquelle zur Emission von optischer Auslenkungsmessstrahlung und einem positionssensitiven Detektor, derart, dass in Reflexion oder Transmission, insbesondere mithilfe eines Positions-Codes, eine Auslenkungsausmassabhängige Projektion der Auslenkungsmessstrahlung auf dem Detektor erzeugbar ist. Mittels des Auslenkungsausmassgebers kann eine entsprechende Winkelstellung des bewegbaren Elements oder eine translatorische Auslenkung bestimmt werden. Diese Winkelposition oder translatorische Auslenkung kann für die entsprechende Bestimmung der räumlichen Koordinaten eines Oberflächenpunktes bereitgestellt werden.

Gemäss einer spezifischen Ausführungsform des optischen Scanners kann der Auslenkungsausmassgeber ein kapazitiver Auslenkungsausmassgeber sein, wobei zwei sich gegenüberliegende Flächen ein Messsignal als messbar bereitstellen welches sich in Relation zum Abstand zwischen den zwei gegenüberliegenden Flächen ändert und basierend darauf das Auslenkungsausmass ausgegeben wird, wobei eine dieser zwei gegenüberliegenden Flächen am bewegbaren Spiegel angeordnet ist. Analog zum optischen Auslenkungsausmassgeber kann die entsprechende Winkel- oder translatorische Auslenkung für die Bestimmung der räumlichen Koordinaten eines angezielten Oberflächenpunktes bereitgestellt werden.

Gemäss einer weiteren spezifischen Ausführungsform des optischen Scanners kann der Auslenkungsausmassgeber ein induktiver Auslenkungsausmassgeber sein mit einem Messfeld in welchem ein sich bewegendes metallisches Objekt detektiert wird, wobei ein metallisches Objekt am beweglichen Element angeordnet ist und das Messfeld eine Nulllage des bewegbaren Elements abdeckt, sodass beim Durchgang des bewegbaren Elements durch die Nulllage das metallische Objekt detektiert wird und basierend darauf das Auslenkungsausmass ermittelt wird. Analog zum optischen und kapazitiven Auslenkungsausmassgeber kann die entsprechende Winkel- oder translatorische Auslenkung für die Bestimmung der räumlichen Koordinaten eines angezielten Oberflächenpunktes bereitgestellt werden.

Unabhängig von der Art des Auslenkungsausmassgebers kann der optische Scanner zumindest Teile des Auslenkungsausmassgebers als strukturierte Beschichtung aufweisen.

In einer spezifischen Ausführungsform des Strahlmanipulationssystems kann der einstückige Verbund mittels eines Ätzverfahrens, insbesondere Laserätzverfahrens, hergestellt sein.

Ein optischer Scanner kann ebenfalls einen Sendekanal zum Aussenden von zumindest einem Teil der Distanzmessstrahlung/Messstrahlung aufweisen. Das System zur Strahlmanipulation ist dann in dem Sendekanal so angeordnet, dass die Richtung der ausgesendeten Messstrahlung/Distanzmessstrahlung zeitlich verändert werden kann. Dabei wird das System zur Strahlmanipulation über eine Steuereinheit fortlaufend insbesondere kontinuierlich angesteuert zur fortlaufenden Änderung der Richtung der ausgesendeten Messstrahlung/Distanzmessstrahlung. Die Distanzmessstrahlung/Messstrahlung kann dabei in einen durch die maximale und minimale Auslenkung des bewegbaren Elements des Strahlmanipulationssystems definierten, insbesondere vertikalen, Sichtfeldbereich des optischen Scanners abgelenkt werden. Die Steuereinheit kann auch zur Erfassung von Messsignalen eines Auslenkungsausmassgebers konfiguriert sein. Des Weiteren kann ein solcher Scanner ebenfalls einen Empfangskanal mit Empfänger haben, der zum Empfangen von mindestens einem Teil einer von dem angezielten geodätischen Zielpunkt oder dem Oberflächenpunkt reflektierten Messstrahlung/Distanzmessstrahlung und basierend auf der Messstrahlung/Distanzmessstrahlung zur Erfassung eines Distanzmesssignals konfiguriert ist. Der Detektor ist dann Teil des Empfängers. Des Weiteren kann ein optischer Scanner eine Recheneinheit aufweisen, die zum Ermitteln von Distanzmessdaten und Koordinateninformationen basierend auf dem erfassten Distanzmesssignal und auf dem Auslenkungsausmass ausgebildet ist.

Eine Totalstation oder ein Theodolit aufweisend eine Ausführungsform des erfindungsgemässen opto-elektro-mechanischen Strahlmanipulationssystems kann eine Strahlquelle zur Erzeugung und Aussendung von Anzielstrahlung als Messstrahlung, eine Grob- und eine Feinanzielfunktionalität mit einem Grob- und Feinanzielsichtfeldbereich zur groben und feinen Ausrichtung des Vermessungsgerätes auf einen entsprechenden geodätischen Zielpunkt aufweisen. Dabei wird im Rahmen der Grobanzielfunktionalität das Vermessungsgerät auf den geodätischen Zielpunkt ausgerichtet, indem die Anzielstrahlung mit einer Ausführung des erfindungsgemässen opto-elektro-mechanischen Strahlmanipulationssystems in den vertikalen Grobanzielsichtfeldbereich abgelenkt wird. Im Rahmen der Feinanzielfunktionalität wird dabei das Vermessungsgerät auf den geodätischen Zielpunkt ausgerichtet, indem die Anzielstrahlung mit einer Ausführung des erfindungsgemässen opto-elektro-mechanischen Strahlablenksystems in den vertikalen Feinanzielsichtfeldbereich abgelenkt wird.

Das erfindungsgemässe opto-elektro-mechanische Strahlmanipulationssystem wird nachfolgend anhand von einem in den Zeichnungen schematisch dargestellten konkreten Ausführungsbeispiel rein beispielhaft näher beschrieben, wobei auch auf weitere Vorteile der Erfindung eingegangen wird. Im Einzelnen zeigen:
- Fig. 1: eine Ausführungsform eines opto-elektromechanischen Strahlablenksystems nach dem Stand der Technik;
- Fig. 2: ein opto-elektro-mechanisches System zur Strahlmanipulation gemäss der Erfindung;
- Fig. 3: Schnittdarstellungen des in Figur 2 gezeigten erfindungsgemässen Strahlmanipulationssystems; und
- Fig. 4: Eine mögliche flexible Verbindung zwischen Stator und bewegbarem Element, welche eine rotatorische und translatorische Bewegbarkeit bereitstellt.

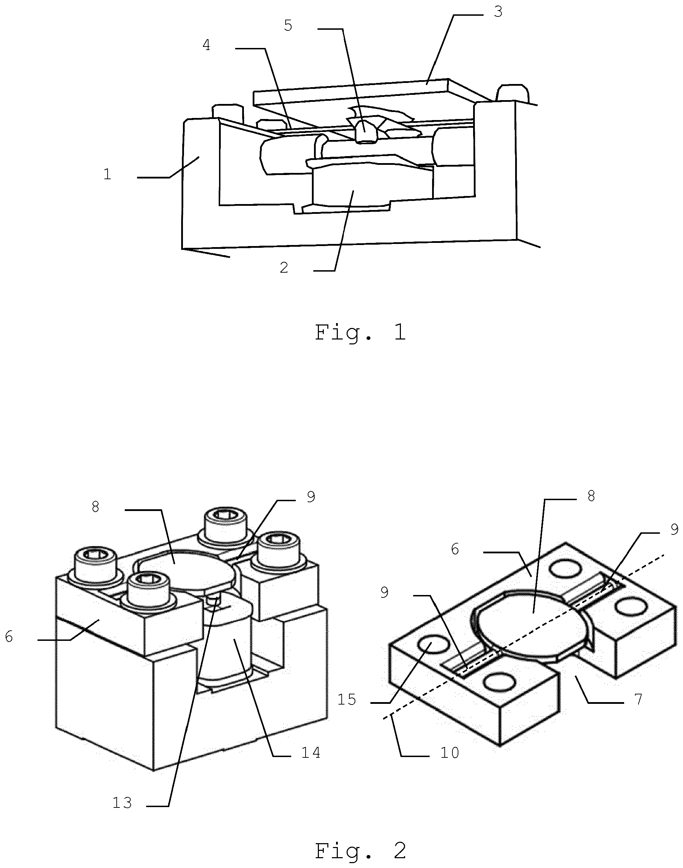

Figur 1 zeigt eine Ausführungsform eines opto-elektro-mechanischen Systems zur Strahlablenkung gemäss dem Stand der Technik. Das System weist einen Stator (1) auf, an welchem eine Spule als Aktorelement (2) befestigt ist. Ein rotatorisch bewegbares Element (3) ist auf ein, eine Torsionsachse/Rotationsachse definierendes stabförmiges Torsionsfederelement (4) geklebt, wobei das Torsionsfederelement an beiden Enden fest mit dem Stator verbunden ist und die rotatorische Bewegbarkeit des Elements (3) bereitstellt. Die Klebestelle, welche das bewegbare Element mit dem Torsionsfederelement verbindet, fixiert auch das weitere Aktorelement (5) hier in der Form eines Permanentmagneten, sowie einen zweiten Permanentmagneten, wobei der zweite Permanentmagnet zur Messung und Regelung der Frequenz dient. Die Aussparung des Stators ist dabei so um das bewegbare Element angeordnet, dass es die rotatorische Auslenkung nicht einschränkt. Mittels Anlegen eines sich mit der Zeit ändernden Stromes an der Spule wird ein sich mit der Zeit änderndes Magnetfeld erzeugt, wodurch das Aktorelement ausgebildet als Permanentmagnet angeregt wird und das bewegbare Element ausgelenkt wird.

Ein solches Strahlablenksystem bietet den Vorteil, dass das bewegbare Element bezüglich seiner Oberflächengrösse und der Form flexibel ausgestaltet sein kann. Nachteilig ist, die aufwändige Montage der einzelnen Komponenten. Die Klebeverbindung zur Fixierung des bewegbaren Elements und des Aktorelements erschwert das Erreichen einer hohen Reproduzierbarkeit bezüglich der Funktionalität montierter Strahlablenksysteme. Entsprechende Schwankungen werden durch aufwändige Kalibrierverfahren ausgeglichen. Aufgrund der Verbindung unterschiedlicher Materialien aus denen die jeweiligen Komponenten, insbesondere das Federelement und das bewegbare Element, und die Verbindungen bestehen treten bei entsprechenden Temperaturänderungen Thermospannungen auf, welche zu Fehlern in der Strahlablenkung führen. Zudem ist es nicht möglich auf ein so befestigtes bewegbares Element beidseitig optische Strahlung einfallen zu lassen oder eingefallene Strahlung beidseitig wieder austreten zu lassen.

Figur 2 zeigt eine beispielhafte Ausführungsform eines opto-elektro-mechanischen Systems zur Strahlmanipulation gemäss der Erfindung. Die Aufnahme, welche das Aktorelement, (14) ausgebildet als Spule, in einer definierten Position fixiert, ist mit dem Stator (6) mittels Schraubverbindungen fix verbunden. Der Stator ist dabei mit dem bewegbaren Element (8) über eine eine rotatorische Bewegbarkeit bereitstellende, flexible Verbindung (9) einstückig verbunden, wobei der Verbund aus Quarzglas besteht. Die Verbindung definiert dabei die Rotations- beziehungsweise Torsionsachse (10). Die Aussparung ist so um das bewegbare Element angeordnet, dass diese die Auslenkung (11, 11') des bewegbaren Elements nicht einschränkt. Der einstückige Verbund kann mit einem Verfahren hergestellt sein, ähnlich einem 3D Druckprozess basierend auf der lokalen Modifikation von Bereichen eines Quarzglasrohlings mittels fokussierter Laserstrahlung und anschliessendem chemischen Wegätzen der zuvor der fokussierten Laserstrahlung ausgesetzten Glasbereiche. Das Aktorelement (13) ist als Permanentmagnet ausgebildet und an dem bewegbaren Element befestigt. Mittels Anlegen eines sich mit der Zeit ändernden Stromes an der Spule wird ein sich mit der Zeit änderndes Magnetfeld erzeugt, wodurch das Aktorelement (13) angeregt wird und das bewegbare Element ausgelenkt wird, wobei sich die Verbindung unter Torsion elastisch verformt. Der Verbindungsquerschnitt der stabförmigen Verbindung ist dabei kreisförmig und weist keine Spitzen oder Ecken auf. Dadurch wird unter Belastung eine homogene Verteilung der mechanischen Spannungen im Verbindungsvolumen erreicht.

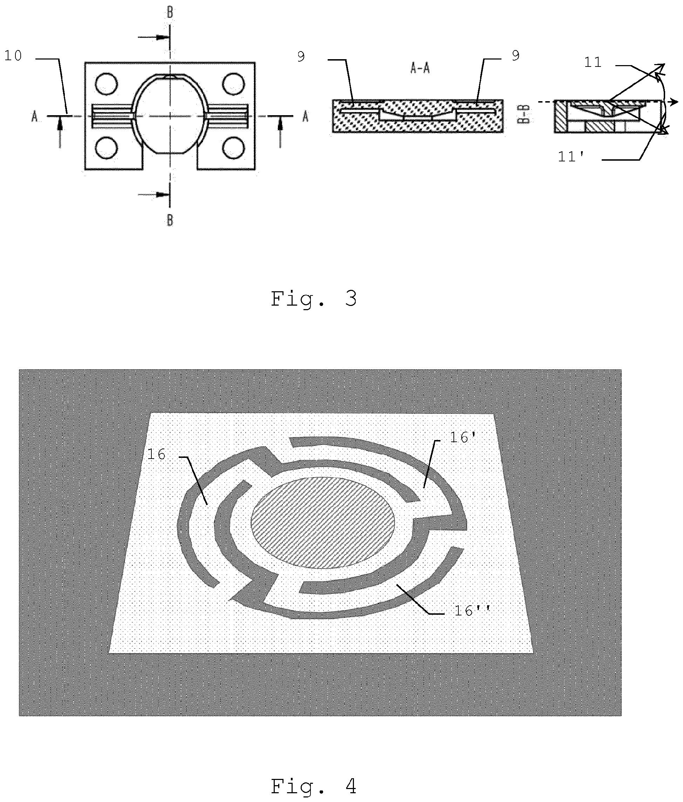

Eine solche Ausführungsform des erfindungsgemässen Strahlablenksystems bietet aufgrund der einstückigen Verbindung von bewegbarem Element und Stator den Vorteil hoher thermischer Stabilität. Die thermische Stabilität ist dabei zurückzuführen auf den über den einstückigen Verbund homogenen geringen thermischen Ausdehnungskoeffizienten von Quarzglas und insbesondere auf die Gegebenheit, dass die flexible Verbindung den gleichen thermischen Ausdehnungskoeffizienten wie das bewegbare Element aufweist. Das flexible und schonende Herstellungsverfahren ermöglicht es annäherungsweise die theoretischen mechanischen Eigenschaften von Quarzglas im Verbindungsvolumen nutzen zu können. Die hohe Steifigkeit in Kombination mit der hohen Fliessspannung bzw. Zugfestigkeit der Verbindung ermöglicht eine hohe Auslenkdynamik in einem grossen Auslenkungsbereich, vor allem bei resonanter Auslenkung bei der das bewegbare Element resonant um die Nulllage schwingt. Eine resonante Auslenkung ist aufgrund der geringen Energie, welche zur Auslenkung aufgewendet werden muss und der Geschwindigkeit mit welcher ein entsprechender Auslenkungsbereich abgefahren werden kann vorteilhaft. Ebenso ist eine resonante Auslenkung bei einer möglichst hohen Resonanzfrequenz vorteilhaft, wobei eine entsprechende Resonanzfrequenz von konstruktiven Merkmalen in Kombination mit materialspezifischen Eigenschaften bestimmt wird. Unter Anderem ist bei der resonanten Auslenkung für die Resonanzfrequenz bestimmend, die Steifigkeit des Federelements, die Spannungsverteilung im Federelement bei dessen elastischer Verformung, welche hauptsächlich über die Form des Federelementquerschnitts bestimmt wird, die Masseverteilung des bewegbaren Elements in Relation zu dem Federelement und die Verbindung zwischen dem Federelement und dem bewegbaren Element. Ein Strahlmanipulationssystem wie in den Figuren 2 und 3 gezeigt stellt ein System bereit, welches bezüglich der resonanzfrequenzbeeinflussenden Faktoren gegenüber dem Stand der Technik optimiert ist. Somit lassen sich aufgrund der Abstimmbarkeit der einzelnen Systemelemente aufeinander höhere Resonanzfrequenzen erzielen bei gleichzeitig reduziertem Hystereseffekt.

Bezüglich der Oberflächengrösse, Form und Funktionalität des bewegbaren Elements ist man gegenüber dem Stand der Technik flexibler, da sich das bewegbare Element auch als optisches Element fertigen lässt, beispielsweise als strahlformende Linse. Somit ist es auch möglich das bewegbare Element oder optische Element mit optischer Strahlung zu durchstrahlen und in Transmission zur Strahlablenkung zu nutzen. Des Weiteren kann die Oberfläche des bewegbaren Elements auch dazu vorbereitet werden, mittels Beschichtung eine optische Strahlung reflektierende Schicht oder Schichtfolge aufzunehmen. Weiterhin würde auch die Möglichkeit bestehen bleiben ein optisches Element an dem bewegbaren Element anzubringen. Gänzlich entfallen bei dem erfindungsgemässen Strahlablenksystem die aufwändigen Montageschritte.

Typische Dimensionen für ein Strahlmanipulationssystem wie es in den Figuren 2 und 3 dargestellt ist sind, das bewegbare Element betreffend, eine Oberflächengrösse von 7 x 7 mm = 49 mm2, wobei das bewegbare Element einen optischen Strahl mit einem Durchmesser von 5 mm ablenken oder formen kann.

Im Ausführungsbeispiel, wie in Figur 2 und 3 gezeigt, ist das bewegliche Element mit dem Stator über eine flexible Verbindung verbunden, welche eine rotatorische Bewegbarkeit bereitstellt. Ebenso kann auch eine, eine translatorische Bewegbarkeit bereitstellende, flexible Verbindung das bewegbare Element mit dem Stator verbinden. Je nach Ausgestaltung der Verbindung kann das bewegliche Element dann eine rotatorische oder translatorische und rotatorische Bewegbarkeit in bis zu 6 Freiheitsgraden aufweisen. Je nach Anzahl und Art der Freiheitsgrade kann die Bewegbarkeit über eine entsprechende flexible Verbindung (siehe Figur 4, 16, 16', 16") zwischen Stator und bewegbarem Element oder über ein auf kardanischer Lagerung basierendes Design bereitgestellt werden. Dabei gelten bezüglich der Verbindungseigenschaften dieselben Vorteile wie bei der eine rotatorische Bewegbarkeit bereitstellenden, flexiblen Verbindung.

Figur 3 zeigt Schnittdarstellungen des in Figur 2 gezeigten erfindungsgemässen Strahlmanipulationssystems. Verdeutlicht ist darin die Torsions-/Rotationsachse (10), welche durch die flexible stabförmige Verbindung definiert wird und um welche das bewegbare Element quasistatisch, dynamisch oder resonant ausgelenkt werden kann.

Figur 4 zeigt rein beispielhaft eine mögliche flexible Verbindung (16, 16', 16") zwischen Stator und bewegbarem Element, welche gleichzeitig eine rotatorische und translatorische Auslenkbarkeit bereitstellt.

Es versteht sich, dass diese dargestellten Figuren nur mögliche Ausführungsbeispiele schematisch darstellen. Die verschiedenen Ansätze können erfindungsgemäss ebenso miteinander sowie mit optischen Vermessungsgeräten oder Scannern des Stands der Technik kombiniert werden.

## Patentansprüche

1. Opto-elektro-mechanisches System zur Manipulation optischer Strahlung, aufweisend
○ ein rotatorisch bewegbares Element (8), wobei das Element selbst ein optisches Element ist oder ein optisches Element aufweist,
○ einen Stator (6) zum bewegbaren Element mit einer einen Auslenkungsbereich freigebenden Aussparung (7),
○ eine eine entsprechende kinematisch definierte Bewegbarkeit bereitstellende, flexible Verbindung (9, 16, 16', 16") zwischen dem Stator (6) und dem bewegbaren Element (8),wobei die flexible Verbindung (9) eine rotatorische Bewegbarkeit bereitstellt, eine Torsionsachse (10) definiert, und sich unter Torsion elastisch verformt, und
○ einen Aktor zur Auslenkung des bewegbaren Elements, wobei der Aktor das bewegbare Element entsprechend der kinematisch definierten Bewegbarkeit rotatorisch auslenkt,
○ wobei der Stator (6) mit dem bewegbaren Element (8) einstückig verbunden ist, und der einstückige Verbund aus Silikatglas, insbesondere Quarzglas besteht, und
○ wobei die Aussparung so um das bewegbare Element angeordnet ist, dass das bewegbare Element entsprechend der kinematisch definierten Bewegbarkeit unter elastischer Verformung der Verbindung (9, 16, 16', 16") mittels des Aktors auslenkbar ist,
**dadurch gekennzeichnet, dass**
die flexible Verbindung (9) stabförmig ausgebildet ist, wobei die stabförmig ausgebildete flexible Verbindung einen gerundeten, insbesondere kreisförmigen oder ovalen, Stabquerschnitt hat.

2. Optischer Scanner zur Vermessung von Oberflächen, aufweisend
○ eine Strahlquelle zur Aussendung optischer Messstrahlung,
○ ein opto-elektro-mechanisches Strahlmanipulationssystem nach Anspruch 1, und
○ einen Detektor zur Detektion von zumindest Teilen der von der zu vermessenden Oberfläche reflektierten Messstrahlung,
wobei
○ das opto-elektro-mechanische Strahlmanipulationssystem einen Auslenkungsausmassgeber zur Bestimmung des Auslenkungsausmasses des bewegbaren Elements aufweist, und
○ die optische Messstrahlung mittels des opto-elektro-mechanischen Strahlmanipulationssystems in Richtung der zu vermessenden Oberfläche abgelenkt wird, sodass
• die zu vermessende Oberfläche von der Messstrahlung mittels des rotatorisch bewegbaren Elements entsprechend der kinematisch definierten Bewegbarkeit abgetastet wird, und
• ein Teil von der reflektierten Messstrahlung mit dem Detektor detektiert wird und basierend darauf und auf dem bestimmten Auslenkungsausmass des bewegbaren Elements die abgetastete Oberfläche vermessen wird.

3. Optischer Scanner nach Anspruch 2, wobei das bewegbare Element zur Strahlablenkung einen Spiegel aufweist, oder das bewegbare Element selbst ein Prisma oder eine Linse ist.

4. Optischer Scanner nach Anspruch 2 oder 3, wobei das opto-elektro-mechanische Strahlmanipulationssystem aufweist
○ einen weiteren Stator zu dem einen Stator mit einer einen weiteren Auslenkungsbereich freigebenden weiteren Aussparung,
○ eine weitere, eine entsprechende kinematisch definierte rotatorische Bewegbarkeit des einen Stators bereitstellende, flexible Verbindung (9, 16, 16', 16") zwischen dem weiteren Stator und dem einen Stator, und
○ einen weiteren Aktor zur rotatorischen Auslenkung des einen Stators, entsprechend der kinematisch definierten Bewegbarkeit, unter elastischer Verformung der weiteren Verbindung (9, 16, 16', 16"),
**dadurch gekennzeichnet, dass**
○ der weitere Stator mit dem einen Stator einstückig verbunden ist und der einstückige Verbund aus Silikatglas insbesondere Quarzglas besteht,
○ die weitere flexible Verbindung (9, 16, 16', 16") zur Bereitstellung einer kinematisch definierten rotatorischen Bewegbarkeit des einen Stators, eine weitere Torsionsachse rechtwinklig zur einen Torsionsachse definiert, stabförmig ausgebildet ist und sich unter Torsion elastisch verformt, sodass die Bewegbarkeit des bewegbaren Elements zwei rotatorische Freiheitsgrade aufweist.

5. Opto-elektro-mechanisches Strahlmanipulationssystem nach Anspruch 1, oder optischer Scanner nach einem der Ansprüche 2 bis 4, **dadurch gekennzeichnet, dass** ein Aktor ein erstes Aktorelement (13) und ein zweites Aktorelement (14) aufweist und das bewegbare Element basierend auf einem Zusammenwirken der Aktorelemente nach einem der Wirkprinzipen aus
○ Elektromagnetismus,
○ Elektrostatik,
○ Piezoelektrizität, und
○ Thermoelektrik
auslenkt.

6. Opto-elektro-mechanisches Strahlmanipulationssystem oder optischer Scanner nach Anspruch 5, **dadurch gekennzeichnet, dass** das erste Aktorelement ein Permanentmagnet und das zweite Aktorelement eine Spule ist.

7. Opto-elektro-mechanisches Strahlmanipulationssystem oder optischer Scanner nach Anspruch 5 oder 6, **dadurch gekennzeichnet, dass** diese zumindest Teile eines Aktorelements als strukturierte Beschichtung aufweisen.

8. Opto-elektro-mechanisches Strahlmanipulationssystem nach Anspruch 1, aufweisend eine Linse, ein Prisma oder ein Spiegel als bewegbares Element, **dadurch gekennzeichnet, dass** entsprechend einer Ausgestaltung der Linse, des Prismas oder des Spiegels eine Strahlablenkbarkeit oder Strahlformbarkeit bereitgestellt wird.

9. Opto-elektro-mechanisches Strahlmanipulationssystem nach Anspruch 8, wobei die Linse Teil einer Alvarez Linse ist.

10. Optischer Scanner nach einem der Ansprüche 2 bis 7, **dadurch gekennzeichnet, dass** der Auslenkungsausmassgeber ein optischer Auslenkungsausmassgeber ist mit einer Strahlquelle zur Emission von optischer Auslenkungsmessstrahlung und einem positionssensitiven Detektor, derart, dass in Reflexion oder Transmission, insbesondere mithilfe eines Positions-Codes, eine Auslenkungsausmassabhängige Projektion der Auslenkungsmessstrahlung auf dem Detektor erzeugbar ist.

11. Optischer Scanner nach einem der Ansprüche 2 bis 7, **dadurch gekennzeichnet, dass** der Auslenkungsausmassgeber ein kapazitiver Auslenkungsausmassgeber ist, wobei zwei sich gegenüberliegende Flächen ein Messsignal als messbar bereitstellen welches sich in Relation zum Abstand zwischen den zwei gegenüberliegenden Flächen ändert und basierend darauf das Auslenkungsausmass ausgegeben wird, wobei eine dieser zwei gegenüberliegenden Flächen am bewegbaren Spiegel angeordnet ist.

12. Optischer Scanner nach einem der Ansprüche 2 bis 7, **dadurch gekennzeichnet, dass** der Auslenkungsausmassgeber ein induktiver Auslenkungsausmassgeber ist mit einem Messfeld in welchem ein sich bewegendes metallisches Objekt detektiert wird, wobei ein metallisches Objekt am beweglichen Element angeordnet ist und das Messfeld eine Nulllage des bewegbaren Elements abdeckt, sodass beim Durchgang des bewegbaren Elements durch die Nulllage das metallische Objekt detektiert wird und basierend darauf das Auslenkungsausmass ermittelt wird.

13. Opto-elektro-mechanisches Strahlmanipulationssystem nach Anspruch 1, **dadurch gekennzeichnet, dass** der einstückige Verbund mittels eines Ätzverfahrens, insbesondere Laserätzverfahrens, hergestellt wird.

## Claims

1. Opto-electro-mechanical system for manipulating optical radiation, comprising
• a rotationally movable element (8), wherein the element is itself an optical element or comprises an optical element,
• a stator (6) for the movable element having a recess (7) enabling a deflection range,
• a flexible connection (9, 16, 16', 16") between the stator (6) and the movable element (8) providing a corresponding kinematically defined mobility, wherein the flexible connection (9) provides a rotational mobility, defines a torsion axis (10), and elastically deforms under torsion, and
• an actuator for deflecting the movable element, wherein the actuator rotationally deflects the movable element in accordance with the kinematically defined mobility,
• wherein the stator (6) is connected in one piece to the movable element (8), and the one-piece connection consists of silicate glass, in particular quartz glass, and
• wherein the recess is arranged around the movable element in such a way that the movable element is deflectable in accordance with the kinematically defined mobility with elastic deformation of the connection (9, 16, 16', 16") by means of the actuator,
**characterized in that**
the flexible connection (9) is formed rod-shaped, wherein the rod-shaped flexible connection has a rounded, in particular circular or oval, rod cross section.

2. Optical scanner for surveying surfaces, comprising
• a radiation source for emitting optical measurement radiation,
• an opto-electro-mechanical beam manipulation system according to Claim 1, and
• a detector for detecting at least parts of the measurement radiation reflected from the surface to be surveyed,
wherein
• the opto-electro-mechanical beam manipulation system comprises a deflection extent encoder for determining the deflection extent of the movable element, and
• the optical measurement radiation is deflected by means of the opto-electro-mechanical beam manipulation system in the direction of the surface to be surveyed, so that
○ the surface to be surveyed is scanned by the measurement radiation by means of the rotationally movable element in accordance with the kinematically defined mobility, and
○ a part of the reflected measurement radiation is detected using the detector and the scanned surface is surveyed based thereon and on the determined deflection extent of the movable element.

3. Optical scanner according to Claim 2, wherein the movable element for beam deflection comprises a mirror, or the movable element itself is a prism or a lens.

4. Optical scanner according to 2 or 3, wherein the opto-electro-mechanical beam manipulation system comprises
• a further stator in relation to the one stator having a further recess enabling a further deflection range,
• a further flexible connection (9, 16, 16', 16"), which provides a corresponding kinematically defined rotational mobility of the one stator, between the further stator and the one stator, and
• a further actuator for the rotational deflection of the one stator, in accordance with the kinematically defined mobility, with elastic deformation of the further connection (9, 16, 16', 16"),
**characterized in that**
• the further stator is connected in one piece to the one stator and the one-piece connection consists of silicate glass, in particular quartz glass,
• the further flexible connection (9, 16, 16', 16"), for providing a kinematically defined rotational mobility of the one stator, defines a further torsion axis perpendicularly to the one torsion axis, is formed rod-shaped, and elastically deforms under torsion, so that
the mobility of the movable element has two rotational degrees of freedom.

5. Opto-electro-mechanical beam manipulation system according to Claim 1, or optical scanner according to any one of Claims 2 to 4, **characterized in that** an actuator comprises a first actuator element (13) and a second actuator element (14) and deflects the movable element based on an interaction of the actuator elements according to one of the action principles of
• electromagnetism,
• electrostatics,
• piezoelectricity, and
• thermoelectrics.

6. Opto-electro-mechanical beam manipulation system or optical scanner according to Claim 5, **characterized in that** the first actuator element is a permanent magnet and the second actuator element is a coil.

7. Opto-electro-mechanical beam manipulation system or optical scanner according to Claim 5 or 6, **characterized in that** it comprises at least parts of an actuator element as a structured coating.

8. Opto-electro-mechanical beam manipulation system according to Claim 1, comprising a lens, a prism, or a mirror as a movable element, **characterized in that** a beam deflection capability or beam shaping capability is provided in accordance with a formation of the lens, the prism, or the mirror.

9. Opto-electro-mechanical beam manipulation system according to Claim 8, wherein the lens is part of an Alvarez lens.

10. Optical scanner according to any one of Claims 2 to 7, **characterized in that** the deflection extent encoder is an optical deflection extent encoder having a radiation source, for emitting optical deflection measurement radiation, and a position-sensitive detector, in such a way that, in reflection or transmission, in particular with the aid of a position code, a deflection-extent-dependent projection of the deflection measurement radiation can be generated on the detector.

11. Optical scanner according to any one of Claims 2 to 7, **characterized in that** the deflection extent encoder is a capacitive deflection extent encoder, wherein two opposing surfaces provide a measurement signal as measurable which changes in relation to the distance between the two opposing surfaces and the deflection extent is output based thereon, wherein one of these two opposing surfaces is arranged on the movable mirror.

12. Optical scanner according to any one of Claims 2 to 7, **characterized in that** the deflection extent encoder is an inductive deflection extent encoder having a measurement field in which a moving metallic object is detected, wherein a metallic object is arranged on the movable element and the measurement field covers a zero position of the movable element, so that as the movable element passes through the zero position, the metallic object is detected and the deflection extent is ascertained based thereon.

13. Opto-electro-mechanical beam manipulation system according to Claim 1, **characterized in that** the one-piece connection is produced by means of an etching method, in particular a laser etching method.

## Revendications

1. Système opto-électro-mécanique destiné à contrôler du rayonnement optique, comportant :
○ un élément mobile en rotation (8), qui est lui-même un élément optique ou qui comporte un élément optique,
○ un stator (6) adjoint audit élément mobile, doté d'un évidement (7) exposant une zone de déflexion,
○ une liaison souple (9, 16, 16', 16") créant une mobilité correspondante, avec une cinématique définie, entre le stator (6) et ledit élément mobile (8), ladite liaison souple (9) créant une mobilité en rotation, définissant un axe de torsion (10), et se déformant de manière élastique sous la torsion, et
○ un agent de déflexion de l'élément mobile, ledit agent faisant fléchir en rotation l'élément mobile selon la mobilité à cinématique définie,
○ le stator (6) étant lié solidairement à l'élément mobile (8), la liaison solidaire étant constituée de verre silicaté, notamment de verre de quartz, et
○ l'évidement étant agencé autour de l'élément mobile de manière que ledit élément mobile peut être fléchi au moyen de l'agent, selon la mobilité à cinématique définie et par déformation élastique de la liaison (9, 16, 16', 16"),
**caractérisé en ce que**
la liaison souple (9) est en forme de barre, ladite liaison souple en forme de barre présentant une section arrondie, notamment circulaire ou ovale.

2. Numériseur optique destiné à mesurer les surfaces, comportant :
○ un émetteur de faisceau destiné à émettre un rayonnement de mesure optique,
○ un système opto-électro-mécanique de contrôle de faisceau selon la revendication 1, et
○ un détecteur destiné à détecter au moins des parties du rayonnement de mesure réfléchi par la surface à mesurer,
dans lequel
○ ledit système opto-électro-mécanique de contrôle de faisceau comporte un évaluateur de déflexion destiné à déterminer l'ampleur de la déflexion de l'élément mobile, et
○ le rayonnement optique de mesure est dévié au moyen du système opto-électro-mécanique de contrôle de faisceau dans la direction de la surface à mesurer, de manière que
• la surface à mesurer est balayée par le rayonnement de mesure au moyen de l'élément mobile en rotation selon la mobilité à cinématique définie, et
• une partie du rayonnement de mesure réfléchi est détectée par le détecteur et à partir de cela, la surface balayée est mesurée via la détermination de l'ampleur de la déflexion de l'élément mobile.

3. Numériseur optique selon la revendication 2, dans lequel l'élément mobile comporte un miroir pour dévier le faisceau, ou l'élément mobile est lui-même un prisme ou une lentille.

4. Numériseur optique selon la revendication 2 ou 3, dans lequel le système opto-électro-mécanique de contrôle de faisceau comporte :
○ un autre stator adjoint audit stator et doté d'un autre évidement exposant une autre zone de déflexion,
○ une autre liaison souple (9, 16, 16', 16") créant une mobilité en rotation correspondante dudit stator, à cinématique définie, entre ledit autre stator (6) et ledit stator, et
○ un autre agent de déflexion en rotation dudit stator, selon la mobilité à cinématique définie et par déformation élastique de ladite autre liaison (9, 16, 16', 16"),
**caractérisé en ce que**
○ ledit autre stator est lié solidairement audit stator, la liaison solidaire est constituée de verre silicaté, notamment de verre de quartz,
○ ladite autre liaison souple (9, 16, 16', 16") destinée à créer une mobilité en rotation dudit stator, à cinématique définie, définit un autre axe de torsion perpendiculaire audit axe de torsion, est en forme de barre et se déforme de manière élastique sous la torsion, de manière que la mobilité de l'élément mobile possède deux degrés de liberté en rotation.

5. Système opto-électro-mécanique de contrôle de faisceau selon la revendication 1 ou numériseur optique selon l'une des revendications 2 à 4, **caractérisé en ce qu'**un agent comporte un premier élément d'agent (13) et un deuxième élément d'agent (14) et fait fléchir l'élément mobile par une coopération desdits éléments d'agent selon l'un des phénomènes actifs suivants :
○ l'électromagnétisme,
○ l'électrostatique,
○ la piézoélectricité, et
○ la thermoélectricité.

6. Système opto-électro-mécanique de contrôle de faisceau ou numériseur optique selon la revendication 5, **caractérisé en ce que** le premier élément d'agent est un aimant permanent et le deuxième élément d'agent est une bobine.

7. Système opto-électro-mécanique de contrôle de faisceau ou numériseur optique selon la revendication 5 ou 6, **caractérisé en ce qu'**il comporte au moins des parties d'un élément d'agent en tant que revêtement structuré.

8. Système opto-électro-mécanique de contrôle de faisceau selon la revendication 1, comportant une lentille, un prisme ou un miroir en tant qu'élément mobile, **caractérisé en ce que**, selon la configuration de la lentille, du prisme ou du miroir, il est créé une possibilité de dévier le faisceau ou de le mettre en forme.

9. Système opto-électro-mécanique de contrôle de faisceau selon la revendication 8, dans lequel la lentille fait partie d'une lentille d'Alvarez.

10. Numériseur optique selon l'une des revendications 2 à 7, **caractérisé en ce que** l'évaluateur de déflexion est un évaluateur optique de déflexion doté d'un émetteur de faisceau destiné à émettre du rayonnement de mesure optique de la déflexion et d'un détecteur sensible à la position tels que, lors de la réflexion ou de la transmission, il est possible d'obtenir sur le détecteur une projection du rayonnement de mesure de la déflexion qui dépend de l'ampleur de la déflexion, notamment à l'aide d'un code de position.

11. Numériseur optique selon l'une des revendications 2 à 7, **caractérisé en ce que** l'évaluateur de déflexion est un évaluateur capacitif de déflexion, et dans lequel deux surfaces opposées créent un signal de mesure mesurable qui varie en fonction de la distance entre lesdites deux surfaces opposées, l'amplitude de la déflexion étant déterminée à partir de cela, étant entendu que l'une des deux surfaces opposées est agencée sur le miroir mobile.

12. Numériseur optique selon l'une des revendications 2 à 7, **caractérisé en ce que** l'évaluateur de déflexion est un évaluateur inductif de déflexion utilisant un champ de mesure dans lequel est détecté un objet métallique en mouvement, ledit objet métallique étant agencé sur l'élément mobile et ledit champ de mesure couvrant une position zéro de l'élément mobile, de manière que ledit objet métallique est détecté lorsque l'élément mobile passe par la position zéro, l'amplitude de la déflexion étant déterminée à partir de cela.

13. Système opto-électro-mécanique de contrôle de faisceau selon la revendication 1, **caractérisé en ce que** la liaison solidaire est fabriquée par un procédé de gravure, notamment un procédé de gravure laser.
